Europäisches Patentamt

European Patent Office

Office européen des brevets

(11) Veröffentlichungsnummer: **0 374 494**
**A2**

## (12) EUROPÄISCHE PATENTANMELDUNG

(21) Anmeldenummer: 89121370.4

(22) Anmeldetag: 18.11.89

(51) Int. Cl.⁵: **B29C 67/14, B29C 43/36**

(30) Priorität: 19.12.88 DE 3842660

(43) Veröffentlichungstag der Anmeldung:
27.06.90 Patentblatt 90/26

(84) Benannte Vertragsstaaten:
**DE ES FR IT SE**

(71) Anmelder: **KRUPP MASCHINENTECHNIK GESELLSCHAFT MIT BESCHRÄNKTER HAFTUNG**
**Helenenstrasse 149**
**D-4300 Essen 1(DE)**

(72) Erfinder: **Brüssel, Richard**
**Hauptstrasse 106**
**D-7519 Sulzfeld(DE)**

(54) **Einrichtung an Presswerkzeugen für die Lagesicherung faserverstärkter Kunststoffmassen.**

(57) Die Erfindung bezieht sich auf eine Einrichtung an Preßwerkzeugen für die Lagesicherung härtbarer Kunststoffmassen, aus denen mittels eines Werkzeug-Ober- und -Unterteils, welche relativ zueinander beweglich angetrieben sind, Preßformteile herstellbar sind.

Um eine unerwünschte Verschiebung der Kunststoffmasse (3) während des Schließens des Preßwerkzeuges (1, 9) zu verhindern, wird der Vorschlag unterbreitet, das Preßwerkzeug-Unterteil (1) an seiner dem Oberteil (9) zugewandten Formseite (1a) mit Haltenadeln (2) auszustatten, die zumindest während der Beschickung und auch während eines Teilabschnitts des Preßvorgangs über die Formseite (1a) hinausragen; die Höhe der Haltenadeln (2) bezüglich der Formseite (1a) ist dabei geringer bemessen als die Dicke der Kunststoffmasse (3) im Nadelbereich.

FIG. 1

EP 0 374 494 A2

# Einrichtung an Preßwerkzeugen für die Lagesicherung faserverstärkter Kunststoffmassen

Die Erfindung bezieht sich auf eine Einrichtung an Preßwerkzeugen für die Lagesicherung härtbarer Kunststoffmassen, aus denen mittels eines Werkzeugober- und Unterteils, welche relativ zueinander beweglich angetrieben sind, Preßformteile herstellbar sind.

Bei der Herstellung von Preßformteilen aus härtbaren Kunststoffmassen, insbesondere SMC-(sheet moulding compound)-Harzmatten, wird das zu verarbeitende Ausgangsmaterial in Form einer Lage oder eines Preßpaketes mit mehreren übereinanderliegenden Lagen bei geöffnetem Preßwterkzeug auf dessen Unterteil (den sogenannten Stempel) aufgelegt und zur Sicherung seiner Lage beispielsweise von Hand angedrückt und/oder verformt. Auch diese Art der Lagesicherung, durch welche die Liegezeit des Ausgangsmaterials im Preßwerkzeug unerwünschter Weise verlängert wird, kann vielfach eine Verschiebung oder ein Abrutschen des Ausgangsmaterials nicht verhindern. Die aus wirtschaftlichen Gesichtspunkten anzustrebende weitestgehende Automatisierung des Preßvorgangs schließt die zuvor erwähnte Art und Weise der Lagesicherung aus.

Der Erfindung liegt die Aufgabe zugrunde, eine Einrichtung für die Lagesicherung härtbarer Kunststoffmassen, insbesondere SMC-Harzmatten, an Preßwerkzeugen zu entwickeln, welche auch bei der Herstellung von Preßformteilen mit verwickelter Form weitestgehend eine Verschiebung bzw. ein Abrutschen des Ausgangsmaterials während des Schließens des Preßwerkzeuges verhindert. Die neue Einrichtung sollte dabei so beschaffen sein, daß sie die Zeitdauer, welche für die Durchführung der Arbeitsabläufe im Bereich des Preßwerkzeugs benötigt wird, nach Möglichkeit nicht verlängert und eine Beschädigung des Preßwerkzeugs auch bei Schaltungsfehlern ausschließt.

Die gestellte Aufgabe wird durch eine Einrichtung mit den Merkmalen des Anspruchs 1 gelöst. Der Grundgedanke der Erfindung besteht danach darin, das Preßwerkzeug-Unterteil an seiner Formseite mit Haltenadeln auszustatten und diese in der Weise auszubilden und anzuordnen, daß sie das zu verformende Ausgangsmaterial festhalten, ohne den durch gegenseitige Annäherung des Ober- und des Unterteils bewirkten Preßvorgang zu behindern. Unter dem Begriff "Haltenadeln" sind dabei jegliche Vorsprünge zu verstehen, die zumindest zeitweilig über die Formseite des Preßwerkzeug-Unterteils vorstehen und - beispielsweise durch Verhaken - mit dem Ausgangsmaterial eine derartige lösbare Verbindung bilden, die ohne besondere Krafteinwirkung von außen eine Lageänderung bezüglich des Preßwerkzeug-Unterteils ausschließt.

In ihrer einfachsten Ausführungsform besteht die Einrichtung aus Haltenadeln, die bezüglich des Preßwerkzeug-Unterteils unbeweglich angebracht sind und deren Höhe bezüglich der Formseite geringer bemessen ist als die Dicke der Kunststoffmasse in dem betreffenden Bereich. Die Anordnung und Ausbildung dieser unbeweglichen Haltenadeln ist so getroffen, daß sie auch bei größter Annäherung zwischen dem Unter- und Oberteil letzteres nicht berühren können.

Bei einer andersartigen Ausführungsform des Erfindungsgegenstandes sind die Haltenadeln bezüglich des Preßwerkzeug-Unterteils im Sinne einer Höhenveränderung beweglich angeordnet (Anspruch 2); die Höhenveränderung kann dabei über einen den Haltenadeln zugeordneten Hubantrieb oder dadurch herbeigeführt werden, daß sie sich unter einer äußeren Krafteinwirkung mitbewegen und dabei ihre Höhenlage bezüglich des Unterteils ändern. Eine selbsttätige Anpassung der Höhenlage der Haltenadeln an die im Bereich des Preßwerkzeugs ablaufenden Arbeitsvorgänge läßt sich dadurch herbeiführen, daß die Haltenadeln federnd an der Kunststoffmasse in Anlage gehalten sind (Anspruch 3); die Abstützung, deren Vorspannkraft zweckmäßig einstellbar ist, kann dabei auf mechanischem, pneumatischem oder hydraulischem Wege (bei letzterem durch Verwendung eines Druckspeichers) erfolgen.

Der Vorteil der federnden Abstützung besteht darin, daß die Höhenlage der Haltenadeln sich während des Preßvorgangs selbsttätig ändert, sobald die über die Kunststoffmasse übertragene Preßkraft größer wird, als die an den Haltenadeln angreifende Vorspannkraft.

Der Erfindungsgegenstand kann insbesondere auch in der Weise ausgestaltet sein, daß die Höhenlage der Haltenadeln bezüglich des Preßwerkzeug-Unterteils mittels eines Hubantriebs veränderbar ist (Anspruch 4); dieser kann insbesondere als Zylinderaggregat ausgebildet und gegebenenfalls (gemäß Anspruch 5) derart geschaltet sein, daß die Höhenlage der Haltenadeln in Abhängigkeit von der Lage des Preßwerkzeug-Oberteils bezüglich des Unterteils veränderbar ist. Falls sich also das Oberteil zur Einleitung des Preßvorgangs dem Unterteil in einem vorgegebenen Maße angenähert hat, eröffnet der Hubantrieb die Möglichkeit, die Höhenlage der Haltenadeln in Anpassung an die weitergehende gegenseitige Annäherung des Ober- und des Unterteils solange zu verändern, bis die Haltenadeln schließlich nicht mehr oder allenfalls geringfügig über das Unterteil hinausragen. Nach Beendigung des Preßvorgangs kann der Hubantrieb vorteilhaft dazu herangezogen werden, durch Hochfahren der Haltenadeln das Auswerfen des Preßformteils zu ermöglichen. Das Hochfahren der Haltenadeln setzt voraus, daß das Preßwerkzeug entweder gleichzeitig durch Auseinanderbewegen des Ober- und des Unterteils geöffnet wird oder bereits zuvor geöffnet worden ist.

Vorzugsweise ist jede Haltenadel an einem höhenverstellbar gehaltenen Nadelträger befestigt, dessen Stellung bezüglich des Preßwerkzeug-Unterteils veränderbar ist (Anspruch 6). Bei einer Weiterbildung des Erfindungsgegenstandes weist jeder Nadelträger auf der dem Preßwerkzeug-Oberteil zugewandten Seite hinsichtlich ihrer Länge einstellbare Druckstempel auf, die - an dem Oberteil zur Anlage gebracht - über dieses mitführbar sind (Anspruch 7). Der Vorteil dieser Ausführungsform besteht darin, daß der Nadelträger der Bewegung des Oberteils angepaßt mitgeführt wird, sobald die Druckstempel an diesem zur Anlage gekommen sind. Mit der Annäherung des Oberteils an das Unterteil nimmt dementsprechend die Höhenlage der Haltenadeln bezüglich der Formseite des Unterteils fortlaufend ab. Der Nadelträger ist dabei zweckmäßig über einen Hubantrieb insbesondere in Gestalt mehrerer parallelgeschalteter Zylinderaggregate - an dem Unterteil abgestützt. Unter Einwirkung des Hubantriebs kann der Nadelträger einerseits hochgefahren werden; andererseits kann der Hubantrieb - beispielsweise über geeignete Ventile - in der Weise ausgebildet sein, daß die von ihm ausgehende Haltekraft kleiner ist als die über das Oberteil an den Druckstempeln angreifende Schließkraft.

Die Druckstempel können an ihrer dem Preßwerkzeug-Oberteil zugewandten Seite zusätzlich Federeinheiten aufweisen, deren Federkraft größer ist als die vom Hubantrieb in Richtung auf das Oberteil ausgeübte Haltekraft (Anspruch 8). Sobald also das Preßwerkzeug-Oberteil im Verlaufe der Schließbewegung an den Federeinheiten der Druckstempel zur Anlage gekommen ist, wird zunächst der Nadelträger - entgegen der Haltekraft des Hubantriebs - nach unten abgesenkt. Erst nachdem der Hubantrieb seine untere Endstellung erreicht hat, setzt das Preßwerkzeug-Oberteil bei stillstehendem Nadelträger entgegen der Wirkung der Federeinheiten seine Abwärtsbewegung in Richtung auf das Unterteil fort.

Der Vorteil dieser Ausführungsform besteht darin, daß die Nadelspitzen der Haltenadeln bereits vor dem Auspreßende in das Preßwerkzeug-Unterteil eingefahren sind. Vorzugsweise sind die Haltenadeln im Hinblick auf den Bewegungsspielraum des Nadelträgers derart bemessen, daß ihre Spitzen einige Millimeter innerhalb des Preßwerkzeug-Unterteils liegen, bevor die Federeinheiten der Druckstempel-nach Einfahren des Hubantriebs in die untere Endstellung - wirksam werden. Es ist ohne weiteres möglich, die Federeinheiten-ebenso wie den Hubantrieb - als Zylinderaggregate mit geeigneten Druckbegrenzungsventilen auszuführen. Bei einer besonders einfachen Ausführungsform des Erfindungsgegenstandes bestehen die Federeinheiten aus Zylindern, die unter Zwischenschaltung von Federn verschiebbar an den Druckstempeln geführt sind (Anspruch 9).

Der Erfindungsgegenstand kann insbesondere auch derart ausgebildet sein, daß jeder Nadelträger sich höhenverstellbar an einer höhenverstellbaren Auswerfer-Traverse abstützt (Anspruch 10). Auf diese Weise läßt sich der Nadelträger unabhängig von der Auswerfer-Traverse bezüglich des Preßwerkzeug-Unterteils verfahren; die Haltenadeln können dementsprechend gleichzeitig als Auswerfernadeln zum Abheben des Preßformteils eingesetzt werden.

Die Erfindung wird nachfolgend anhand in der Zeichnung dargestellter Ausführungsbeispiele im einzelnen erläutert.

Es zeigen:

Fig. 1 in Form eines Schemabildes die Ausstattung eines Preßwerkzeug-Unterteils mit unbeweglichen Haltenadeln,

Fig. 2 schematisch einen vertikalen Teilschnitt durch das Unterteil eines Preßwerkzeugs mit federnd in diesem abgestützter Haltenadel,

Fig. 3 schematisch einen Vertikalschnitt durch ein Preßwerkzeug mit bezüglich des Preßwerkzeug-Unterteils beweglich gehaltenem Nadelträger und

Fig. 4 schematisch einen Vertikalschnitt durch ein Preßwerkzeug-Unterteil mit höhenverstellbarer Auswerfer-Traverse und bezüglich dieser höhenverstellbarem Nadelträger.

In ihrer einfachsten Ausführungsform besteht die Einrichtung zur Lagesicherung aus Haltenadeln 2, die unbeweglich an der nach oben gerichteten Formseite 1a eines Preßwerkzeug-Unterteils 1 befestigt sind, und zwar symetrisch zur Mittelebene 1b des Unterteils. Dabei liegen beiderseits der genannten Mittelebene senkrecht zur Zeichenebene jeweils mehrere Haltenadeln 2 hintereinander. Die Höhe der über die Formseite 1a hinausragenden Nadelspitzen 2a ist dabei kleiner als die Dicke d des zu verarbeitenden Preßpaketes 3 bestehend aus mehreren übereinanderliegenden klebrigen SMC-Harzmattenabschnitten 3a.

Durch die Auflage auf den Nadelspitzen 2a wird eine unerwünschte Verschiebung des Preßpaketes 3 bezüglich des Unterteils 1 auch vor Einleiten des Preßvorgangs weitestgehend unmöglich gemacht. Die durch den Preßvorgang unter Einwirkung der Haltenadeln 2 am Preßformteil entstandenen Vertiefungen sind in den meisten Fällen nicht störend; ihre Abmessungen können durch geeignete Bemessung der Nadelspitzen 2a - die in dem dargestellten Beispiel annähernd senkrecht zur Formseite 1a ausgerichtet ist - auf das unbedingt erforderliche Ausmaß begrenzt werden.

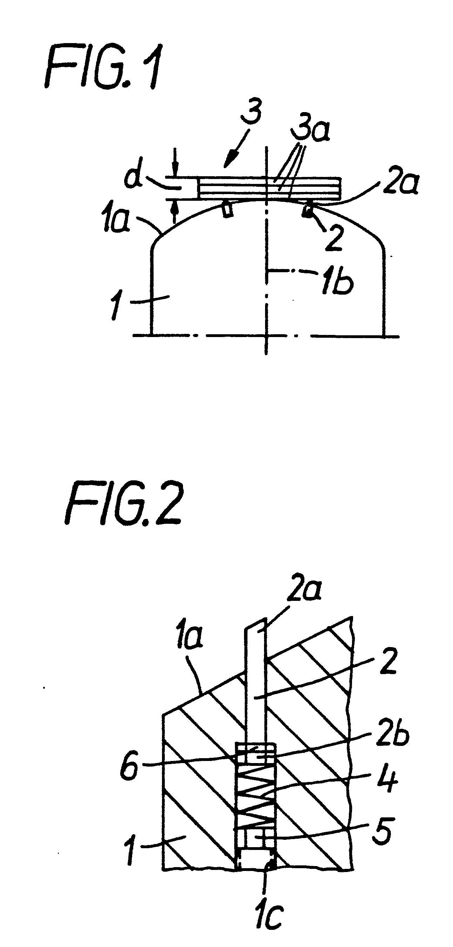

Bei der in Fig. 2 dargestellten Ausführungsform ist die Haltenadel 2 höhenveränderlich im Preßwerkzeug-Unterteil 1 geführt und stützt sich über eine vorgespannte Schraubenfeder 4 und eine Gewindeplatte 5 nachgiebig an dem Unterteil ab. Der Bewegungsspielraum der Haltenadel 2 in Richtung auf die Formseite 1a ist durch einen an der Nadelunterseite 2b befestigten Anschlagring 6 festgelegt. Die Vorspannung der Schraubenfeder 4 läßt sich durch Drehen der Gewindeplatte 5 in einer Gewindebohrung 1c des Unterteils einstellen. Der Vorteil der in Rede stehenden Ausführungsform ist darin zu sehen, daß die unter Einwirkung der Vorspannkraft an dem nicht dargestellten Preßpaket (vergl . dazu Fig. 1) anliegende Haltenadel 2 eine Rückführbewegung in Richtung auf das Unterteil 1 ausführen kann, sobald über das Preßpaket eine ausreichend große Anpreßkraft in Richtung auf das Unterteil ausgeübt wird.

Selbstverständlich kann anstelle der beschriebenen mechanischen Feder auch ein pneumatisch oder hydraulisch wirksames Federelement zum Einsatz kommen.

Wie die Darstellung zeigt, ist die Nadelspitze 2a in einer der Formseite 1a angepaßten Weise abgeschrägt.

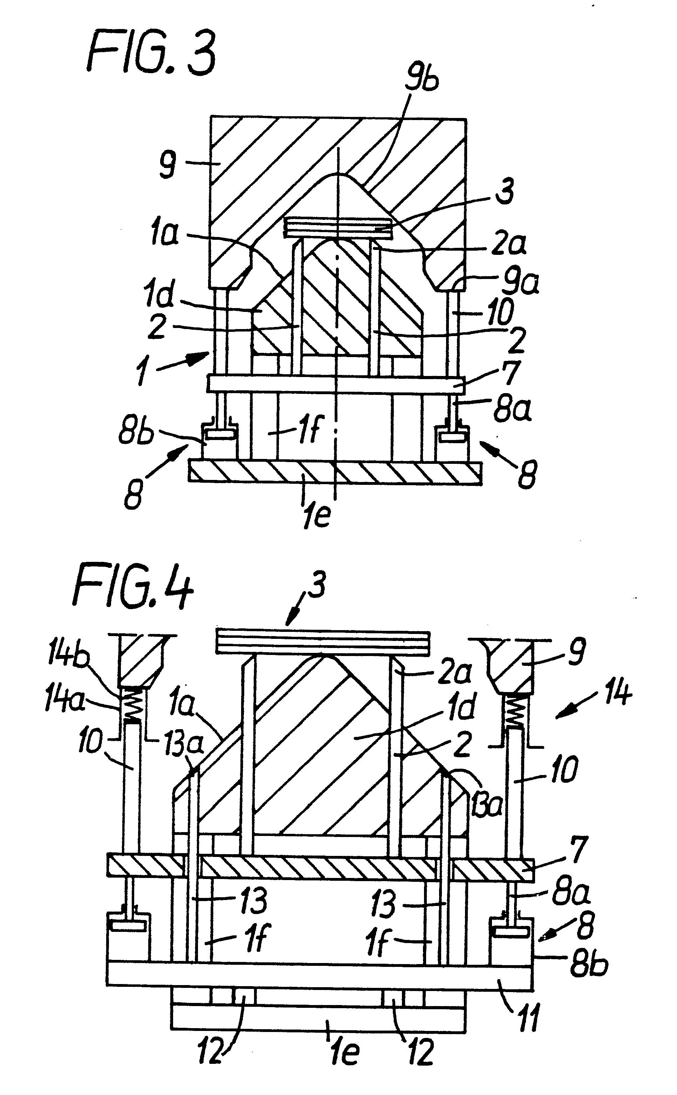

Bei der Ausführungsform gemäß Fig. 3 sind die Haltenadeln 2, die auch senkrecht zur Zeichenebene mit Abstand hintereinanderliegen und durch das Kopfteil 1d des Preßwerkzeug-Unterteils 1 hindurch geführt sind, unterhalb des Kopfteils an einem Nadelträger 7 befestigt; dieser stützt sich über einen Hubantrieb in Form zweier Zylinderaggregate 8 höhenverstellbar an der Fußplatte 1e des Unterteils 1 ab, welches über Stützen 1f mit dem Kopfteil 1d in Verbindung steht. Während die Kolbenstangen 8a der Zylinderaggregate an der Unterseite des Nadelträgers 7 befestigt sind, stellen die zugehörigen Zylindergehäuse 8b einen unbeweglichen Bestandteil der Fußplatte 1e dar. Auf der dem Preßwerkzeug-Oberteil 9 zugewandten Oberseite ist der Nadelträger 7 mit Druckstempeln ausgestattet, die zweckmäßigerweise hinsichtlich ihrer Länge (beispielsweise über eine Gewindeverbindung mit Sicherungsmutter) einstellbar sind.

Die Druckstempel 10 ermöglichen es, den Nadelträger 7 und die an diesen befestigte Haltenadeln 2 zwangsweise nach unten zurückzuführen, und zwar unter Einwirkung der Stirnflächen 9a des Preßwerkzeug-Oberteils 9.

Sobald sich die Teile 1 und 9 durch eine Relativbewegung zueinander soweit aneinander angenähert haben, daß sich das Oberteil 9 über die Stirnflächen 9a an den Druckstempeln 10 abstützt, wird bei weitergehender Annäherung über diese der Nadelträger 7 - entgegen der Wirkung der Zylinderaggregate 8 - auf die Fußplatte 1e zu bewegt; diese Bewegung hat zur Folge, daß die Nadelspitzen 2a in Richtung auf die Formseite 1a zurückgezogen werden und dementsprechend in dem Preßpaket 3 allenfalls unbedeutende Vertiefungen bilden können. Die Zylinderaggregate 8 sind in der Weise mit schaltbaren Ventilen ausgestattet, daß sie bei der gegenseitigen Annäherung der Teile 1 und 9 lediglich eine verhältnismäßig geringe Haltekraft erzeugen können.

Die Druckstempel 10 weisen vorteilhaft eine Länge auf, die sicherstellt, daß die Stirnflächen 9a des Oberteils 9 erst dann an ihnen zur Anlage kommen, wenn letzteres über seine Formfläche 9b bereits eine geringe Preßkraft auf das Preßpaket 3 ausübt.

Der Erfindungsgegenstand kann auch derart ausgebildet sein, daß sich der Nadelträger 7 über die Zylinderaggregate 8 an einer Auswerfer-Traverse 11 abstützt, die ihrerseits über eine Höhenverstellung in Form zweier (nicht weiter dargestellter) Zylinderaggregate 12 bezüglich der Fußplatte 1e des Preßwerkzeug-Unterteils höhenverstellbar ist (Fig. 4). Die Auswerfer-Traverse ist dabei an ihrer Oberseite mit Auswerfernadeln 13 ausgestattet, die - ebenso wie die Haltenadeln 2 - beweglich in dem Kopfteil 1d gehalten und deren Spitzen in einer der Formseite 1a angepaßten Weise abgeschrägt sind. In der in Rede stehenden Darstellung schließen die Spitzen 13a mit der Formseite 1a ab.

Bei der Ausführungsform gemäß Fig. 4 sind die Druckstempel 10 an ihrer dem Preßwerkzeug-Oberteil 9 zugewandten Seite zusätzlich mit Federeinheiten 14 ausgestattet. Diese bestehen aus Zylindern 14a, die sich unter Zwischenschaltung von Federn 14b verschiebbar an den Druckstempeln abstützen. Die Federn 14b sind derart ausgelegt, daß ihre Federkraft größer ist als die von den Hubantrieben 8 in Richtung auf das Oberteil 9 ausgeübte Haltekraft.

Sobald sich also das Oberteil 9 im Verlaufe der Schließbewegung an den Zylindern 14a. abstützt, wird zunächst der Nadelträger 7 in Richtung auf die Auswerfer-Traverse 11 solange nach unten verschoben, bis die Hubantriebe 8 ihre untere Endstellung erreicht haben. Erst anschließend setzt das Oberteil 9 - entgegen der Wirkung der Federn 14b- seine Schließbewegung bis zum Abschluß des Auspreßvorgangs fort.

Die in Rede stehende Ausführungsform gestattet es, den Nadelträger 7 unabhängig von der Höhenlage der Auswerfer-Traverse 11 zu bewegen und durch gleichzeitiges Ausfahren der Zylinderaggregate 8 und 12 die Haltenadeln 2 ebenfalls als Auswerfer-Nadeln für das hergestellte Preßformteil einzusetzen.

Der mit der Erfindung erzielte Vorteil besteht darin, daß die zu verarbeitende Kunststoffmasse durch Abstützung auf den Haltenadeln zumindest solange gegen Verschieben oder Abrutschen gesichert werden kann, bis nach Einleiten des Preßvorgangs eine unerwünschte Lageänderung bezüglich des Preßwerkzeug-Unterteils ausgeschlossen ist. Durch die Ausstattung mit höhenverstellbaren Haltenadeln kann darüber hinaus die Entstehung störender Vertiefungen im Preßformteil weitestgehend vermieden werden.

**Ansprüche**

1. Einrichtung an Preßwerkzeugen für die Lagesicherung härtbarer Kunststoffmassen, aus denen mittels eines Werkzeugober- und -unterteils, welche relativ zueinander beweglich angetrieben sind, Preßformteile herstellbar sind, **dadurch gekennzeichnet**, daß das Preßwerkzeug-Unterteil (1) an seiner dem Oberteil (9) zugewandten Formseite (1a) über diese zumindest während der Beschikkung und auch während eines Teilabschnitts des Preßvorgangs hinausragende Haltenadeln (2) aufweist, deren Höhe bezüglich der Formseite geringer bemessen ist als die Dicke der Kunststoffmasse (3) im Nadelbereich.

2. Einrichtung nach Anspruch 1, dadurch gekennzeichnet, daß die Haltenadeln (2) bezüglich des Preßwerkzeug-Unterteils (1) im Sinne einer Höhenveränderung beweglich angeordnet sind.

3. Einrichtung nach zumindest einem der Ansprüche 1 - 2, dadurch gekennzeichnet, daß die Haltenadeln (2) federnd an der Kunststoffmasse (3) in Anlage gehalten sind.

4. Einrichtung nach zumindest einem der Ansprüche 1 - 3, dadurch gekennzeichnet, daß die Höhenlage der Haltenadeln (2) bezüglich des Preßwerkzeug-Unterteils (1) mittels eines Hubantriebs (8) veränderbar ist.

5. Einrichtung nach zumindest einem der Ansprüche 1 - 4, dadurch gekennzeichnet, daß die Höhenlage der Haltenadeln (2) in Abhängigkeit von der Lage des Preßwerkzeug-Oberteils (9) bezüglich des Unterteils (1) veränderbar ist.

6. Einrichtung nach zumindest einem der Ansprüche 4- 5, dadurch gekennzeichnet, daß jede Haltenadel (2) an einem höhenverstellbar gehaltenen Nadelträger (7) befestigt ist, dessen Stellung bezüglich des Preßwerkzeug-Unterteils (1) veränderbar ist.

7. Einrichtung nach Anspruch 6, dadurch gekennzeichnet, daß jeder Nadelträger (7) auf der dem Preßwerkzeug-Oberteil (9) zugewandten Seite hinsichtlich ihrer Länge einstellbare Druckstempel (10) aufweist, die - an dem Oberteil (9) zur Anlage gebracht - über dieses mitführbar sind.

8. Einrichtung nach Anspruch 7, dadurch gekennzeichnet, daß die Druckstempel (10) an ihrer dem Preßwerkzeug-Oberteil (9) zugewandten Seite Federeinheiten (14) aufweisen, deren Federkraft größer ist als die vom Hubantrieb (8) in Richtung auf das Oberteil (9) ausgeübte Haltekraft.

9. Einrichtung nach Anspruch 8, dadurch gekennzeichnet, daß die Federeinheiten (14) aus Zylindern (14a) bestehen, die unter Zwischenschaltung von Federn (14b) verschiebbar an den Druckstempeln (10) geführt sind.

10. Einrichtung nach zumindest einem der Ansprüche 6 bis 9, dadurch gekennzeichnet, daß jeder Nadelträger (7) sich höhenverstellbar an einer höhenverstellbaren Auswerfer-Traverse (11) abstützt.

FIG.1

FIG.2

# FIG. 3

# FIG. 4